# EUROPEAN PATENT APPLICATION

(11) **EP 4 531 446 A1**
(43) Date of publication of application: **02.04.2025**
(21) Application number: 24203193.8
(22) Date of filing: 27.09.2024
(51) Int. Cl.: H04W 12/03, H04W 12/04, H04L 9/08

(54) **MOBILITY DOMAIN ACCESS POINT WIDE PAIRWISE TRANSIENT KEY**

(30) Priority: 29.09.2023 US 202363541579 P; 26.09.2024 US 202418897176
(71) Applicant: Apple Inc., Cupertino, CA 95014 (US)
(72) Inventor: KNECKT, Jarkko L., Cupertino, CA, 95014 (US); HEDAYAT, Ahmad Reza, Cupertino, CA, 95014 (US); DOMINGUEZ, Charles F., Cupertino, CA, 95014 (US); VERMA, Lochan, Cupertino, CA, 95014 (US); MONAJEMI, Pooya, Cupertino, CA, 95014 (US); LIU, Yong, Cupertino, CA, 95014 (US)
(74) Representative: Lang, Johannes

(57) **Abstract**

Disclosed are methods, systems, and computer-readable medium to perform operations including encrypting association data, by a station in a mobility domain of a wireless communication network, wherein the encrypting is performed using a pairwise transient key (PTK) and transmitting the encrypted association data to an AP to establish a wireless communication link.

## Description

### CLAIM OF PRIORITY

This application claims priority under 35 U.S.C. §119(e) to U.S. Patent Application Serial No. 63/541,579, filed on September 29, 2023, the entire contents of which are hereby incorporated by reference.

### BACKGROUND

Many electronic devices communicate with each other using wireless local area networks (WLANs), such as those based on a communication protocol that is compatible with an Institute of Electrical and Electronics Engineers (IEEE) standard, e.g., the IEEE 802.11 standard (also known as "Wi-Fi"). A WLAN can include an access point (AP) that provides one or more stations (STAs) with access to another network, such as the Internet. There are many generations of the IEEE 802.11 standard, including 802.11ax (Wi-Fi 6) and 802.11be (Wi-Fi 7).

IEEE 802.11 is a packet-based protocol. Under this protocol, a transmitter, e.g., an access point (AP), packages control information and/or user data into a protocol data unit (PDU) in a physical layer convergence protocol (PLCP). The PLCP PDU (PPDU) includes a preamble and a data field, among other fields. After generating the PPDU, the access point can send the PPDU to a station connected to the access point. Communication from the access point to a station is referred to as the downlink, and the communication from a station to the access point is referred to as the uplink.

### SUMMARY

This disclosure describes a wireless communication system in which pairwise transient keys (PTKs) are synchronized with all access points (APs) in a mobility domain. In the communication system described herein, a station (STA) generates a PTK only once for encryption. The following signaling in the mobility domain is encrypted. The station can initialize communication links with multiple AP multi-link devices (MLDs) using a single association signaling sequence. For example, a network can include a wireless local area network (WLAN) or WLAN mesh network. A station can associate with two or more access points of the network using a single association signaling process.

A station configures addresses for protected AP discovery, association, or roaming within the mobility domain. The station may send PTK-protected scanning messages (e.g., for probing requests) to send ranging or measurement requests to the AP in the mobility domain. The scanning messages are preconfigured to use STA addresses that are known to the AP. The AP recognizes the scanning message based on the known address, and the AP can receive the transmitted frame in the scanning message.

In an aspect, a station may add link(s) to the station's association with an AP MLD that belong in mobility domain for which the station has created a PTK. The station may not have already established communication links to the AP MLDs for which the station is adding links to the station's association.

In an aspect, the AP MLD may include multiple APs. One AP and the station may set up a link. The station, by using the preconfigured addresses in the address fields of the scanning messages, assists the receiving AP MLD to detect the station and apply a correct station-specific PTK. The preconfigured scanning addresses are known only to particular remote devices and to the station. Station privacy is protected from attackers or other unauthorized users. For example, the station uses the scanning address messages to transmit to an AP MLD that is not yet connected to the network to assist the AP MLD in connecting to the network. The station may transmit data on multiple links when the multiple links are with the same AP MLD. The station may also set up multiple links with other AP MLDs. The station may use the PTK with all AP MLDs belonging to the same mobility domain.

In an aspect, a state diagram can illustrate one or more frame types that the STA is able to send and/or receive with the network. In a first state that represents an unauthenticated, unassociated state, the STA is able to transmit and/or receive class 1 frames. In a second state, the STA is authenticated (except directional multi-gigabit (DMG) STAs that do not perform IEEE 802.11 authentication) and unassociated. In the second state, the authenticated STA is able to send and/or receive class 1 and class 2 frames. In a third state, the STA is authenticated and associated. In some instances, a STA in the third state may still be pending robust security network association (RSNA) authentication. In the third state, the STA is configured for transmitting and/or receiving class 1, class 2, and class 3 frames. Further, in some instances the IEEE 802.1x controlled port can be blocked, so the STA in the third state cannot send frames to the Internet (or to another network beyond an AP).

Once the STA has successfully completed a four-way handshake, the STA transitions to state 4. In state 4, the STA is authenticated, associated, and RSNA is established (or not required). In state 4, the STA is configured for transmitting and/or receiving class 1, class 2, and class 3 frames. Further, the IEEE 802.1x controlled port can be unblocked, so the STA can send frames to the Internet (or anther network beyond the AP). In some implementations, the STA can transition from state 2 directly to state 4 based on one of the following alternatives. In a first alternative, the STA can perform successful (re)association, and no RSNA is required. In a second alternative, the STA can perform a personal basic service set (PBSS) four-way handshake. In a third alternative, the STA can perform fast initial link setup (FILS) (re)association and key confirmation. In a fourth alternative, the STA can perform fast basic service set (BSS) transition. The pairwise master key (PMKr0 and PMKr1) can be shared among the mobility domain access points (APs) to enable fast BSS transition (FT).

In some mobility domain systems (e.g., for Wi-Fi 7), the station can operate at a first mobility domain support level or at a second mobility domain support level. At the first mobility domain support level, there is no 802.11r operational support. In such implementations, the station authenticates every BSS separately, and there is no PMK sharing in the communication network. At the second mobility domain support level, the network supports Fast BSS Transition (FT), as defined in 802. 1 lr, operations. The station authenticates and creates PMK with the network and the network forwards the PMK to one or more access points in the mobility domain, enabling fast transition of the BSS. The shared PMK in the second mobility domain support level enables the station to transition from state 2 directly to state 4, as previously described. To support level two, the APs support the same authentication and key management (AKM) suite values and may use the same PMK. The mobility domain embodiments previously described enable fast BSS transition or pre-association security negotiation (PASN) key derivation from the PMK.

The previous mobility domain systems (e.g., for Wi-Fi 7) include one or more technical limitations. The previous systems allow the station to transmit data on multiple links, as long as these links are with the same AP MI,D, but do not allow preparation or link setup with other AP MLDs. The fast BSS transition (FT BSS) and pre-association security negotiation (PASN) derive the PTK used in the pre-association encryptions from the PMK. Because the current association signaling supports only a single PTK creation, associating the STA and the AP MLD creates a PTK that is only used between the STAs of the MLD pair, and a STA can associate with only one access point MLD (AP MLD). In other words, the association signaling is not able to create multiple PTKs and thus does not enable respective PTKs of multiple PTKs to each be used with a different AP MLD. The previous systems also do not support forwarding or tunneling the association signaling from one physical AP to another. The AP MLD-specific PTK generation requires additional signaling overhead and can delay association or roaming.

Additionally, PTK creation is authentication mechanism AKM suite specific. For example, pre-shared keys, WPA3 enterprise, and opportunistic wireless encryption (OWE) networks may generate PTKs differently from one another. AP MLDs in the mobility domain AP (MD AP) each support the same authentication mechanism and AKM, and the AP MLDs support the same signaling for all supported authentication schemes.

The systems and processes described in this specification enable one or more of the following advantages. A station can add one or more additional links, e.g., to one or more neighbor access points, in the same mobility domain. A station can add one or more communication links to one or more additional access points without requiring setup of one or more additional PTKs for those additional communication links. The station may need to generate a PTK only one time, e.g., when the station associates with a first AP MLD of the mobility domain AP, thereby reducing signaling overhead and simplifying use of keys.

The station can establish multiple links with the same AP MLD and/or for one or more additional neighbor AP MLDs without requiring performance of a four-way handshake with each AP MLD. The use of a synchronized PTK for multiple communication links in the mobility domain reduces signaling overhead, as an additional four-way handshake is not required for establishing each communication link. Rather, the station generates a PTK only one time and can use that PTK with each of the access points associated with the mobility domain. Further, the station can create links with multiple AP MLDs using the same association signaling with those multiple AP MLDs.

The station's privacy is protected by use of the mobility domain AP-wide PTK. After the station has set up the PTK, the STA transmits using only encrypted management frames and may have one or more addresses that cannot be tracked when sent over the air. Transmissions by the station that include the scanning addresses can assist the receiving AP MLD in detecting the station and in applying the correct PTK. As one or more scanning addresses are known only to the network and the station, a station's privacy can be protected, e.g., from detection and/or tracking by unauthorized parties.

The details of one or more embodiments of these systems and processes are set forth in the accompanying drawings and the description below. Other features, objects, and advantages of these systems and processes will be apparent from the description and drawings, and from the claims.

### BRIEF DESCRIPTION OF THE FIGURES

FIG. 1 illustrates a block diagram of an example of electronic devices communicating wirelessly, according to some implementations.
FIG. 2A illustrates an example of an address hierarchy.
FIG. 2B illustrates an example diagram showing data payload encryption.
FIG. 2C illustrates an example diagram showing data payload decryption.
FIG. 2D illustrates a flow diagram that shows an example process for establishing communication links in a wireless network.
FIG. 3 illustrates a flow diagram that shows an example process for authentication used in establishing a communication link in a wireless network.
FIG. 4A illustrates a flow diagram that shows an example process for scanning addresses for establishing a communication link in a wireless network.
FIG. 4B illustrates a flow diagram that shows an example process for scanning addresses for establishing a communication link in a wireless network.
FIGS. 5A-5D illustrate example communication networks that show example processes for establishing communication links in a wireless network with a mobility domain AP-wide PTK.
FIG. 6 illustrates a flow diagram that shows an example process for establishing communication links in a wireless network.
FIG. 7 illustrates a flowchart of an example process for wireless communication.
FIG. 8 illustrates a flowchart of an example process for wireless communication.
FIG. 9 illustrates a block diagram of an example electronic device.

### DETAILED DESCRIPTION

This specification describes a wireless communication system in which pairwise transient keys (PTKs) are synchronized with multiple access points (APs) in a mobility domain. In the communication system described herein, a station (STA) generates a PTK once and subsequent signaling in the mobility domain is encrypted, e.g., in accordance with the PTK. The station can initialize communication links with multiple access point (AP) multi-link devices (MLDs) using a common association signaling sequence. For example, a network can include a wireless local area network (WLAN) and a station can associate with multiple AP MLDs using a common association signaling process. In some implementations, the network can be a mesh network.

The association signaling includes one or more scanning addresses for the associated station. The associated station transmits PTK-protected scanning messages (e.g., for probe requests) by setting the transmitter address to a scanning address. The associated station may request to add one or more links to an AP MLD of an access point in a mobility domain for which the station does not have established communication links. The station assists the receiving AP MLD to detect the station and apply a correct PTK by applying the scanning address as the transmitter address. The scanning addresses are known only to devices in the communication network and to the station. Accordingly, station privacy is protected from attackers and/or other unauthorized parties. For example, the station transmits one or more of the scanning addresses when the station transmits to an AP MLD that is not yet connected to the network.

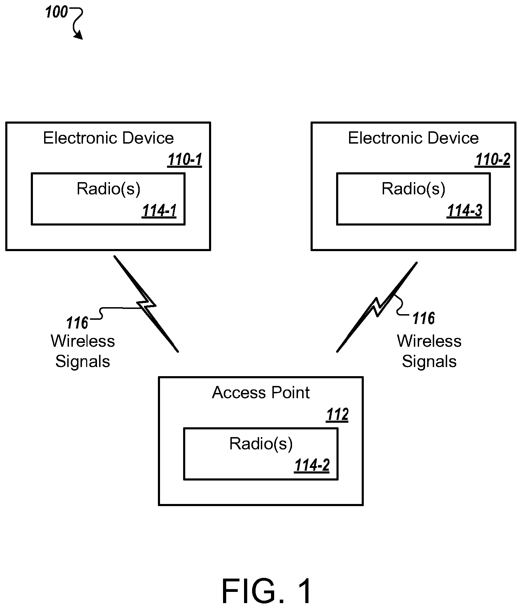

FIG. 1 illustrates a block diagram 100 of an example of electronic devices communicating wirelessly, according to some implementations. Notably, one or more electronic devices 110 (such as a smartphone, a laptop computer, a notebook computer, a tablet, or another such electronic device) and access point 112 can communicate wirelessly in a WLAN using an IEEE 802.11 communication protocol. Thus, electronic devices 110 can be associated with or can have a connection with access point 112. For example, electronic devices 110 and access point 112 can wirelessly communicate while: detecting one another by scanning wireless channels, transmitting and receiving beacons or beacon frames on wireless channels, establishing connections (e.g., by transmitting connect requests), and/or transmitting and receiving packets or frames (which can include the request and/or additional information, such as data, as payloads). Note that the access point 112 can provide access to a network, such as the Internet, via an Ethernet protocol, and can be a physical access point or a virtual or "software" access point that is implemented on a computer or other electronic device that performs functions other than serving as an AP. In this specification, electronic devices 110 are sometimes referred to as "recipient electronic devices" or "receiver stations."

Although the environment shown in FIG. 1 is provided as an example, in alternative implementations, different numbers and/or types of electronic devices can be present. For example, some implementations can include more or fewer electronic devices. As another example, in some implementations, different electronic devices can be transmitting and/or receiving packets or frames. In some implementations, multiple links can be used during communication between electronic devices 110.

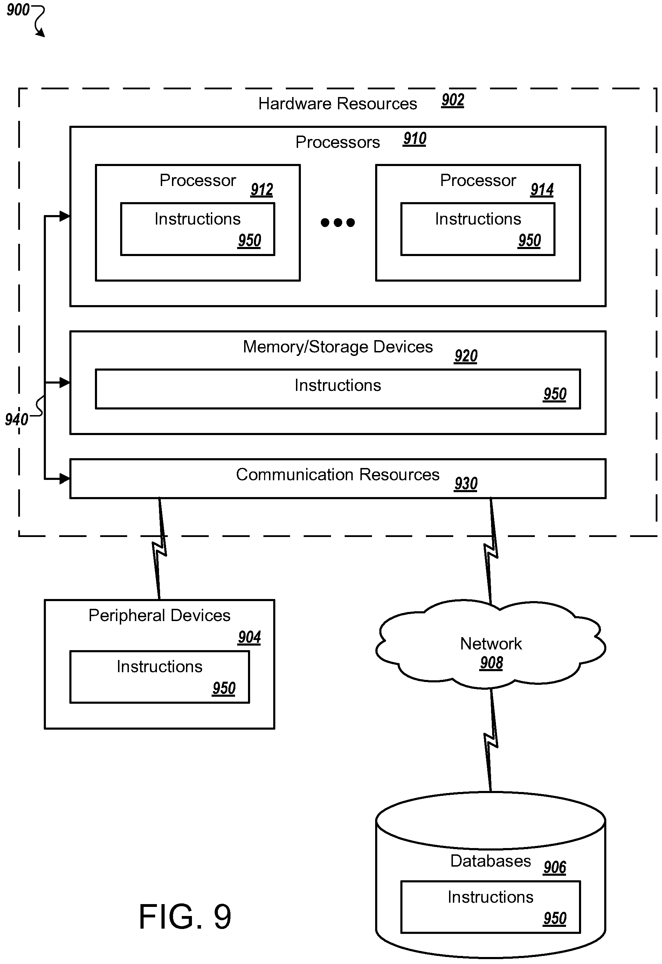

As described further below with reference to FIG. 9, electronic devices 110 and access point 112 can include subsystems, such as a networking subsystem, a memory subsystem, and a processor subsystem. In addition, electronic devices 110 and access point 112 can include radios 114 in the networking subsystems. More generally, electronic devices 110 and access point 112 can include (or can be included within) any electronic devices with networking subsystems that enable electronic devices 110 and access point 112, respectively, to wirelessly communicate with each other or with another electronic device. This can include transmitting beacons on wireless channels to enable the electronic devices to make initial contact or to detect each other, followed by exchanging subsequent data/management frames (such as connect requests) to establish a connection, configure security options, transmit and receive packets or frames via the connection, etc.

As shown in FIG. 1, wireless signals 116 are communicated by one or more radios 114-1 and 114-2 in electronic device 110-1 and access point 112, respectively. For example, as noted previously, electronic device 110-1 and access point 112 can exchange packets or frames using a Wi-Fi communication protocol in a WLAN. Further, one or more radios 114-1 can receive wireless signals 116 that are transmitted by one or more radios 114-2 via one or more links between electronic device 110-1 and access point 112. Alternatively, the one or more radios 114-1 can transmit wireless signals 116 that are received by the one or more radios 114-2.

In some implementations, wireless signals 116 are communicated by one or more radios 114 in electronic devices 110 and access point 112, respectively. For example, one or more radios 114-1 and 114-3 can receive wireless signals 116 that are transmitted by one or more radios 114-2 via one or more links between the electronic devices 110-1 and 110-2, and the access point 112.

In some implementations, the access point 112 can group the electronic devices 110 into a target station set. The target station set concept comes from downlink multi-user transmission where the access point 112 can transmit to multiple stations simultaneously in one PPDU using Orthogonal Frequency Division Multiple Access (OFDMA) or multiuser (MU) Multiple Input Multiple Output (MU-MIMO). Here, the target station set is a set of stations that can simultaneously be served by the access point 112. The stations in the set do not need to share the same PHY parameters, such as MCS, number of streams, etc.

In some implementations, the access point 112 can simultaneously communicate with a plurality of electronic devices 110 using multiuser (MU) techniques, such as MU Multiple Input Multiple Output (MU-MIMO). In some examples, the access point 112 communicates with the electronic devices 110 using frequency multiplexing such that the access point 112 allocates to each of the electronic devices a portion of the overall bandwidth. For example, to simultaneously communicate with four electronic devices over an 80 Megahertz (MHz) bandwidth, the access point 112 transmits a MU-PPDU over the 80 MHz bandwidth. The MU-PPDU includes a sub-PPDU for each of the four electronic devices, e.g., where each sub-PPDU (or sub-channel) is allocated 20 megahertz (MHz). The access point 112 can use the MU-PPDU to communicate with devices in the same target set, devices in different target sets, or a combination of both.

In some implementations, access point 112 and one or more electronic devices can be compatible with an IEEE 802.11 standard that includes trigger-based channel access, e.g., IEEE 802.11ax. In 802.11ax, Orthogonal Frequency Division Multiple Access (OFDMA) is used to enable simultaneous communications between the access point 112 and multiple electronic devices. OFDMA divides the available physical spectrum into multiple orthogonal sub-channels, or resource units (RUs), which can be allocated to different electronic devices (users). Under the standard, the access point 112 coordinates multiuser OFDMA by broadcasting a trigger frame which, among other things, allocates a RU to each participating electronic device. Each electronic device responds to the trigger frame by transmitting a PPDU to the access point 112 using the allocated RU. The trigger frame can also include power control information. The access point 112 can instruct all electronic devices 110 when to start and stop transmitting. Note that access point 112 and the electronic devices 110 can communicate with one or more legacy electronic devices that are not compatible with the IEEE 802.11 standard (e.g., that do not use multi-user trigger-based channel access).

In some implementations, processing a packet or frame in one of the electronic devices 110, access point 112, or a combination of both, includes: receiving wireless signals 116 encoding a packet or a frame; decoding/extracting the packet or frame from received wireless signals 116 to acquire the packet or frame; and processing the acquired packet or frame to determine information conveyed by the packet or frame (such as data in the payload).

As discussed previously, one or more of electronic devices 110 and access point 112 can communicate with each other. Notably, access point 112 can transmit a PPDU that includes a preamble and a data field. In some implementations, access point 112 can be configured to use concatenated PPDUs (C-PPDUs), e.g., for low latency communications with receiver stations. A C-PPDU includes a plurality of component PPDUs, each of which can include a preamble and a data payload. As described in more detail below, the C-PPDU includes a plurality of component PPDUs. The first component PPDU is preceded by a first preamble called a "full preamble." The remaining component PPDUs in the C-PPDU are preceded by respective preambles that can be shorter in length than the first preamble. In some implementations, the access point 112 might not perform contention or receive a block acknowledgement (BA) before the plurality of component PPDUs are transmitted.

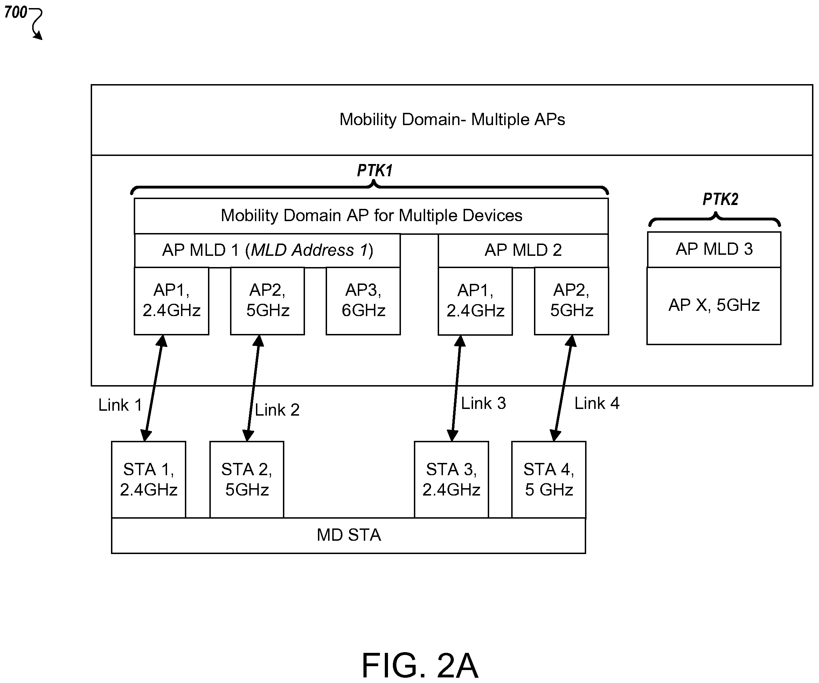

FIG. 2A illustrates an example of an address hierarchy 700 for Wi-Fi. The address hierarchy is for a mobility domain in which there are multiple APs, including multiple AP MLDs. The APs of the address hierarchy 700 can support the same AKM values and can use the same PMK. Frames transmitted over the air have a link address in MAC header address fields.

The PTK derivation uses the addresses of the station and the AP in the mobility domain. The mobility domain AP-wide PTK is derived by the station using the AP MAC address of the mobility domain AP, and the PTK is the same for the AP MLDs in the mobility domain. The mobility domain station's address is used to identify the station and the mobility domain AP's address is used to identify the AP during authentication and the 4-way handshake. In some embodiments, the station may also have multiple MLD addresses.

Device addresses of the AP, station, or both in the mobility domain can be used for authentication. The mobility domain AP's address and/or address of the station is used for authentication in the mobility domain (e.g., for Wi-Fi 8) and for a 4-way handshake (e.g., for Wi-Fi 8). A generated PTK can be common to all the APs in the mobility domain.

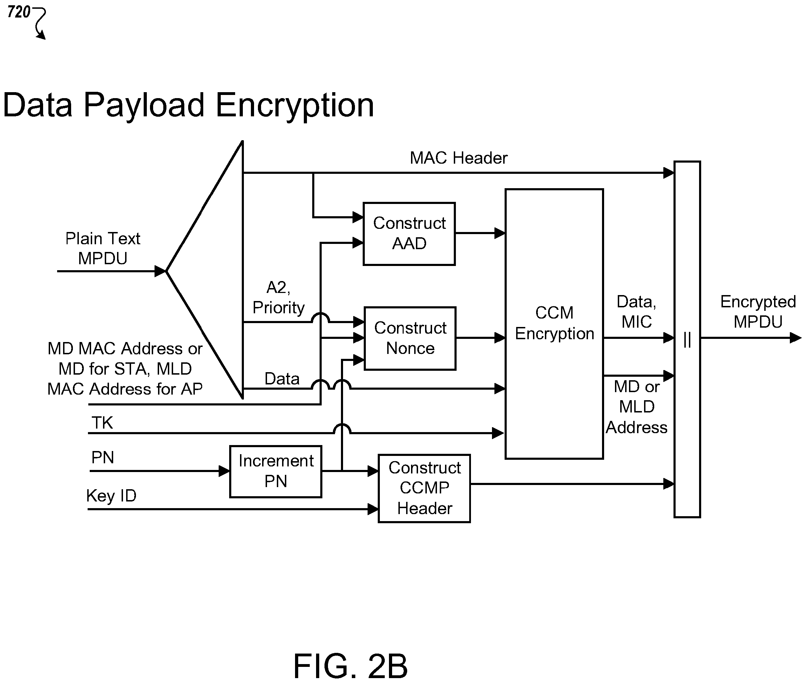

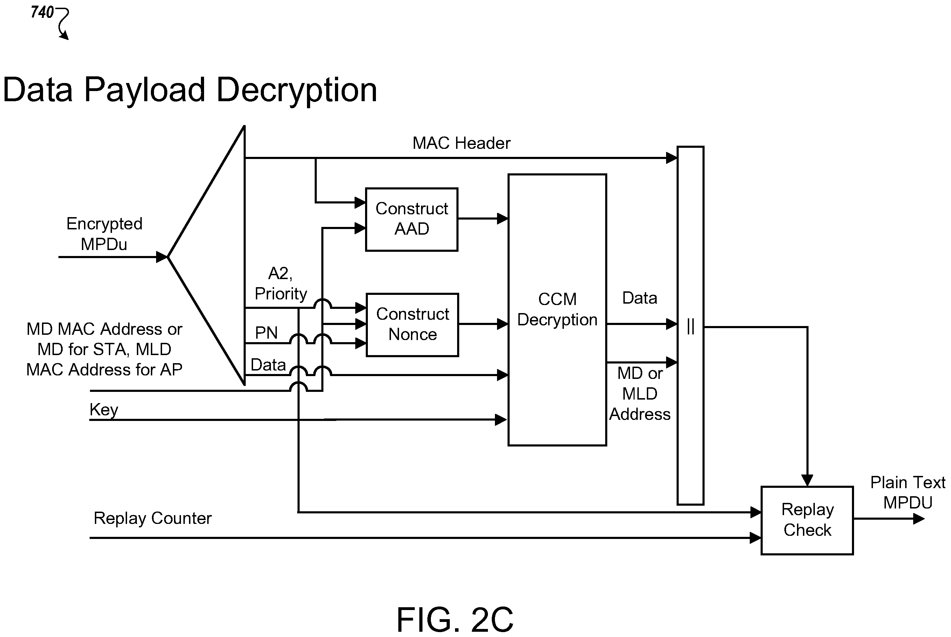

FIG. 2B illustrates an example diagram showing a process 720 for data payload (frame) encryption. FIG. 2C illustrates an example diagram showing a process 740 for data payload (frame) decryption. The additional authentication data (AAD) is used as one or more input parameters for encryption and/or decryption of the data frame. In some implementations, the AAD field of earlier standard versions (e.g., Wi-Fi 6 and earlier) uses one or more link-specific addresses. In the case of Wi-Fi 6, the station and the AP each have only one address. In some implementations, (e.g., Wi-Fi 7) the AAD field can use the MLD address. Use of the MLD address ensures that encrypted packets may be transmitted on any link of the AP MLD as the encryption and/or decryption is not link-specific.

Each of the processes 720, 740 is configured for at least two options. In a first option, encryption and/or decryption is based on the mobility domain-level address of the AP and the mobility domain-level address of the station. A same encryption and/or decryption may be used for all AP MLDs of the mobility domain AP. The packet numbering (PN) is continuous for the APs. The continuous PN ensures that replay attacks are not possible for the network. In a second option, the encryption and/or decryption is based on the station MLD address and MLD address of the AP. The encryption can be AP MLD specific. The PN for different AP MLDs may be different in each AP. The station mobility domain address may allow the station to skip the MLD layer and use a 2-level architecture, or 3-address architecture with an MLD address.

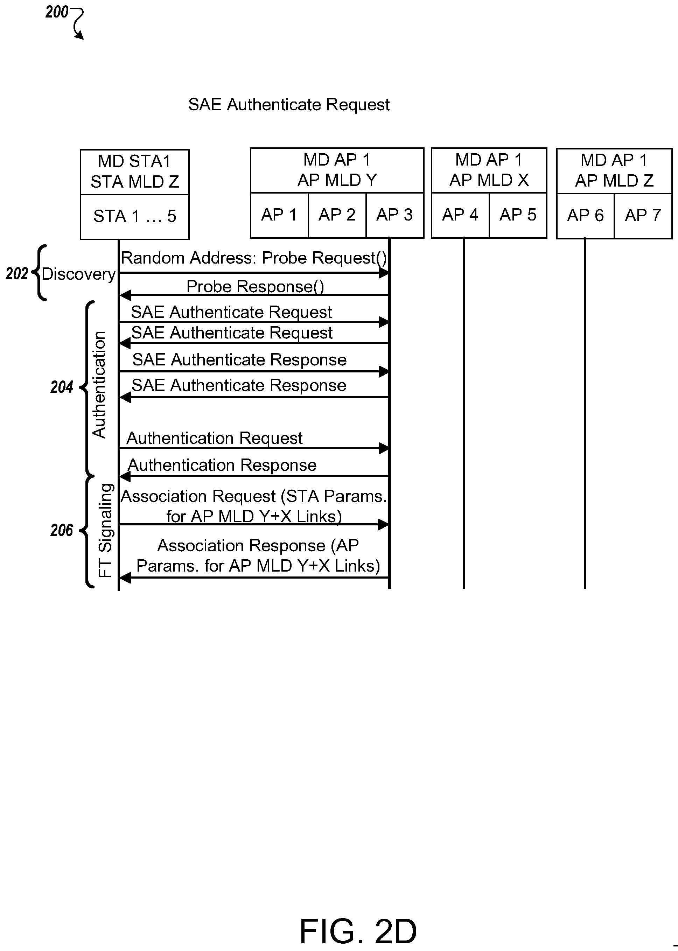

FIG. 2D illustrates a flow diagram that shows an example process 200 for establishing communication links in a wireless network. The network includes a station, which includes a multi-device capability for wireless communication with a plurality of access points. In the example, the station includes five virtual stations numbered here as STA1, STA2, STA3, STA4 and STA5. However, in other implementations, the station can include any number of two or more virtual STAs. The mobility domain AP1 includes a first AP MLD Y, a second AP MLD X, and a third AP MLD Z. The first AP MLD Y includes three APs designated AP1, AP2, and AP3. The second AP MLD Y includes two APs designated AP4 and AP5. The third AP MLD Z includes two APs designated AP6 and AP7. However, in other implementations, the mobility domain AP can include any number of two or more AP MLDs, which respectively can include any number of two or more APs. The station is configured to connect to one or more of the APs in the process 200. The process 200 includes a discovery stage 202, an authentication stage 204, and an FT signaling stage 206.

The process 200 includes mobility domain AP-wide generation of a PMK and a PTK. In the process 200, the station STA1 is configured to establish communication links with multiple AP MLDs in the mobility domain AP using the same association signaling to establish each link. The STA MD is authenticated on the mobility domain level with the mobility domain AP, which allows the same PTK to be used on all AP MLDs affiliated with the same MD AP. The created PTK is synchronized with all access points in the mobility domain AP. The station generates a PTK once for all AP MLDs in the mobility domain AP. The process 200 eliminates the need to perform four-way handshakes with each of the AP MLDs of each of the mobility domain access point devices, such as AP MLD Y, AP MLD X, and AP MLD Z.

The station may perform a discovery stage 202 of the process 200. In the discovery stage 202, the station may send a probe request with a transmitter address set to one or more random addresses and receive one or more probe responses from one or more devices wishing to establish a communication link.

The station performs an authentication stage 204, which includes the SAE requests and SAE responses described previously. The station is configured to perform fast BSS transition (FT) signaling at the FT signaling stage 206. The station sends an association request including station parameters for all AP MLDs links to be established. In this example, the station is connecting to AP1 through AP5 of the AP MLD Y and AP MLD X. Responsive to the single association request including the station parameters for all of the communication links with different AP MLDs, the station receives an association response for each access point for which a communication link is being established. The association response includes access point parameters for all AP MLD Y and AP MLD X communication links for each of AP1 to AP5.

The station, once process 200 is completed, is associated with each of AP1 through AP5. The station has generated one PTK that is used with all of the AP MLDs in the mobility domain. The station has created three communication links with AP MLD Y and two communication links with AP MLD X.

The station can transmit to the AP MLD Z using one or more of the scanning addresses, as previously discussed. The station can therefore establish one or more communication links with AP MLD Z using the same PTK as was used with AP MLD Y and AP MLD X. In this way, the station is configured to use the existing PTK to establish a communication link with one or more additional access points. The station generates the PTK once and can reuse the PTK with other devices in the network.

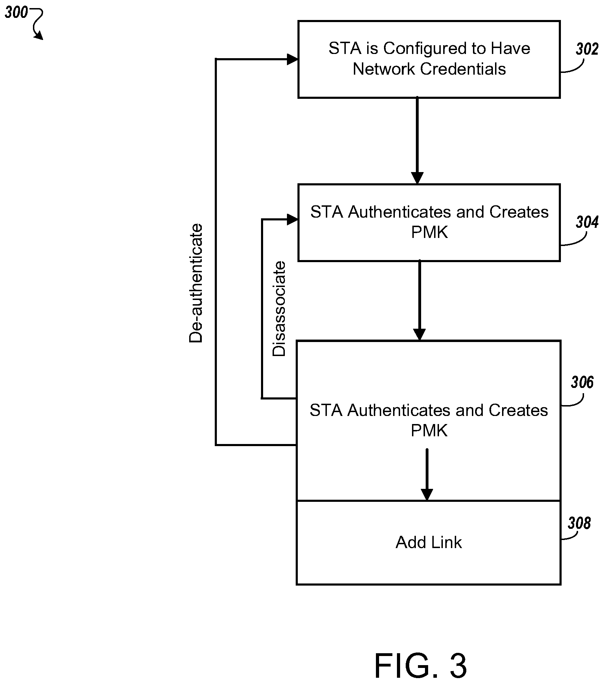

FIG. 3 illustrates a flow diagram that shows an example process 300 for authentication and association for establishing a communication link(s) in a wireless network. The process 300 represents different states of the station and configured information for the mobility domain. At state 302, the station is configured to obtain network credentials, for instance by scanning. The STA stores the obtained network credentials. The network credentials can include any of a service set identifier (SSID), an AP MLD address, an AP MLD parameter, one or more affiliated AP parameters, and/or other credentials.

At state 304, the station authenticates with the network and generates a PMK, e.g., to be used for establishing communication links with other devices in the network. The PMK is a single PMK for that station and can be used with all AP MLDs in the mobility domain AP. In some implementations, the PMK can be based on the mobility domain-level media access control (MAC) address of the mobility domain station and mobility domain AP.

At state 306, the station associates with one or more other AP MLDs in the network and generates the PTK for those devices in a 4-way handshake. The station can add one or more communication links using the generated PTK of the station. Over the air (OTA) MAC addresses of associated AP MLDs are received by the station. The station also can obtain one or more MLD addresses associated with a non-AP MLD and/or AP MLD beacon integrity group temporal key (BIGTK) of the APs.

When in state 306, the station can de-authenticate from the network to return to state 302. For example, a STA or AP may send a frame to command a *de-authenticate* operation. The de-authentication includes generation of a de-authenticate frame to be received by the station. The de-authentication frame deletes the PMK and PTK, and all stored addresses at the station. In some implementations, the STA may maintain the mobility domain-level address it used to perform authentication and the AP MD address, e.g., to be able to authenticate again with the mobility domain AP. In conjunction with the de-authentication, the network may maintain the station credential(s) to detect the STA again in the future.

When in state 306, the station can disassociate from the one or more other devices of the network. When the station disassociates from the mobility domain AP, the station deletes the PTK, all communication links, and all station link MAC addresses, MLD addresses and scanning addresses corresponding to the one or more other devices of the network. To associate with the devices of the network, the station sends an association request that specifies one or more STA parameters for the links, obtains an association response that specifies the one or more AP parameters for the links, generates an additional PTK in a 4-way handshake for the one or more devices of the network and again performs association signaling with the other devices of the network.

When in state 306, the station can delete one or more communication links to disconnect from one or more particular access points or other devices of the network. To disconnect a communication link, the station can delete one link and discard the station OTA MAC address associated with that communication link. The command can include a *deletelink* frame transmission that deletes one link and discards the station OTA MAC address associated with the link.

When in state 308, the station is linked to one or more APs using OTA MAC addresses. The station uses MLD addresses of non-AP multi-link devices and AP MLD BIGTK of the APs.

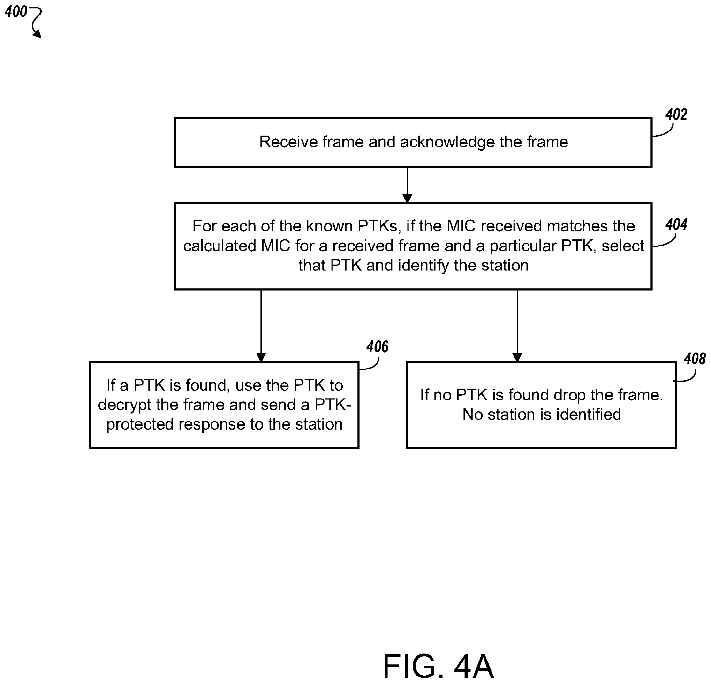

FIG. 4A illustrates a flow diagram that shows an example process 400 identifying the station from a message integrity code (MIC) checksum. In the process, a receiver, such as an AP, performs operations to identify the transmitter (e.g., a station) from the MIC checksum.

The process 400 includes receiving (402) the frame from the transmitter and acknowledging the frame. The process 400 includes analyzing (404) a MIC for each PTK known by the receiver. When the receiver determines that the received MIC matches a calculated MIC value (a checksum) based on the PTK and received frame, the receiver selects the current PTK and identifies the station. For example, if a PTK is found, the receiver decrypts (406) the received frame using the PTK and sends a PTK-protected response. If no PTK is found, the receiver drops (408) the frame, and no station is identified.

An example frame includes a preamble, a MAC header, a data payload, a MIC field, and a Frame Check Sequence (FCS) field. The preamble, MAC header, MIC field, and FCS are clear. The data payload is encrypted. The MIC is calculated on the data payload.

The MIC calculation complexity increases linearly as a function of the number of the stations with an assigned PTK. The AP may have hardware to calculate multiple MIC checksums in parallel, such as for triggered transmissions. The stations associated with neighboring APs of the AP performing the process 400 are likely to send a PTK protected frame to the AP. The AP may start MIC calculations from these stations. The transmitter (station) may allow the AP to respond OTA and/or over-the-DS, in which the station communicates with the AP through an associated AP MLD. An over-the-DS response may mitigate station power consumption and reduce operation time on the communication link. The station may receive a delayed response without relatively large power consumption. The transmitter-controlled OTA response time includes a PTK-protected probe request followed by an acknowledgment by the receiver (e.g., the AP). During a response time OTA, the transmitter (e.g., a station) can receive a PTK-protected probe response. After the response time OTA, the station can receive an over-the-DS response.

There are multiple possible communication link types in the mobility domain. The PTK receiver has an Add Link () function in which links such as data links, non-data links, and scanning links are added. For example, the communication link types can include a scanning link, which includes a link in which the station uses one or more preconfigured scanning addresses to send protected management frames (PMF), protected probe frames, and/or access network query protocol (ANQP) frames to an AP in the mobility domain. The station can be associated with multiple scanning addresses.

The communication link types also can include a non-data link for measurement. For this non-data link, the station uses the preconfigured scanning address(es) to send PMF-protected ranging requests, measurement requests, and/or other data requests to an access point in the mobility domain. The non-data link for measurement is used for measurement operations and is not used to perform data transmissions.

The communication link types also can include a non-data link for signaling. For this non-data link, the station and the access point can configure the STA MAC address for a non-data link. This link type may be used to transmit pre-association signaling.

The communication link types also can include a setup link. A setup link includes a link capable of data transmission link but that is not used to exchange data. Rather, the link setup can be used by the station and the AP to exchange their capabilities and operation parameters. A station roams to the setup link. The roaming will change the setup link to the type 6 link. The station can send pre-association data on a setup link.

The communication link types also can include a hot standby link. The hot standby link is a special case of setup link in which the station and the access point have already exchanged their capabilities and operation parameters. The hot standby link is used to prepare for station roaming inside the mobility domain AP. The hot standby link is prepared for station roaming by synchronizing a buffered uplink and/or downlink data of the station for a currently associated AP MLD with the AP MLD to which the buffered link belongs.

The communication link types also can include an associated AP MLD data link for uplink and/or downlink data transmission and reception. A station in the mobility domain may be capable of sending data with one AP MLD at a time. The station may also be able to send pre-associated signaling over multiple links to multiple APs. Use of these link types is described in additional detail below with respect to the processes and systems for the mobility domain AP-wide PTK for a mobility domain.

The station is configured for new mobility domain services. For network discovery, the station is configured for using specific transmit addresses on discovery frames by using signaling that adds scanning addresses and deletes scanning addresses. For network discovery, the station configures scanning addresses for protected access point discovery, association, and/or for roaming within the mobility domain. The station may use configuration signaling for adding a beacon integrity key or deleting a beacon integrity key (BIGTK) of an AP. The BIGTK of the access point is configured for the station, so the station can verify beacon integrity based on the transmitting AP address and the BIGTK. The beacon integrity key can also be signaled on a PTK protected probe response.

The station can be configured for additional services for scanning and measurement of links. The station can be configured to add a non-data link or delete a non-data link. For this functionality, the station creates a link for secure scanning, ranging, and/or other measurements. The station and the access point do not need to signal association parameters, e.g., their capabilities and operations parameters, for a link used for scanning and/or measurement. The station and access points cannot transmit uplink or downlink data on a link used for scanning and/or measurement.

The station can be configured for additional services for roaming and/or links for other purposes. For example, the station can be configured to use the mobility domain AP-wide PTK for adding links, deleting links, setting the AP MLD to hot standby, and/or for roaming to an additional AP MLD. For adding and/or deleting links, the station and the AP can create a link that may be used for data transmission later or the link may be set up for pre-association transmissions. The link setup signaling can include one or more association parameters. For setting the AP MLD to hot standby mode, the station can be configured to prepare an AP MLD setup link(s) ready for roaming, but the station can remain associated with the current AP MLD link(s). For roaming to an additional AP MLD, the station transmits a PTK-protected roaming request to change the station association to an additional AP MLD.

The links may use the mobility domain AP address or AP MLD address used for encryption and/or decryption. Each encrypted frame should include a unique nonce value to keep the encryption secure and to enable replay detection. The nonce value can include at least one of the packet number (PN) or the transmitter address, which can be set to the mobility domain AP or AP MLD address. In some implementations, the packet number can be unique for each transmitted frame.

If the mobility domain AP address is used in the encryption and/or decryption, the transmitter and/or receiver can maintain the status of the received packet numbers. The packet numbers shall be transmitted continuously or semi-continuously, such that each new frame that is transmitted has a larger PN value. Controlling for uniqueness for the PN for data frames is simpler than non-data and scanning links, because only one AP MLD allocates one PN at a time. Thus, data transmissions generally use MD addresses that are in the nonce value. Non-data links and scanning links generally do not use MLD addresses in the nonce value. Data links may also use MLD addresses in the nonce value, but in this case, the data transmissions can allocate a larger PN than for the possible non-data link or scanning link transmissions.

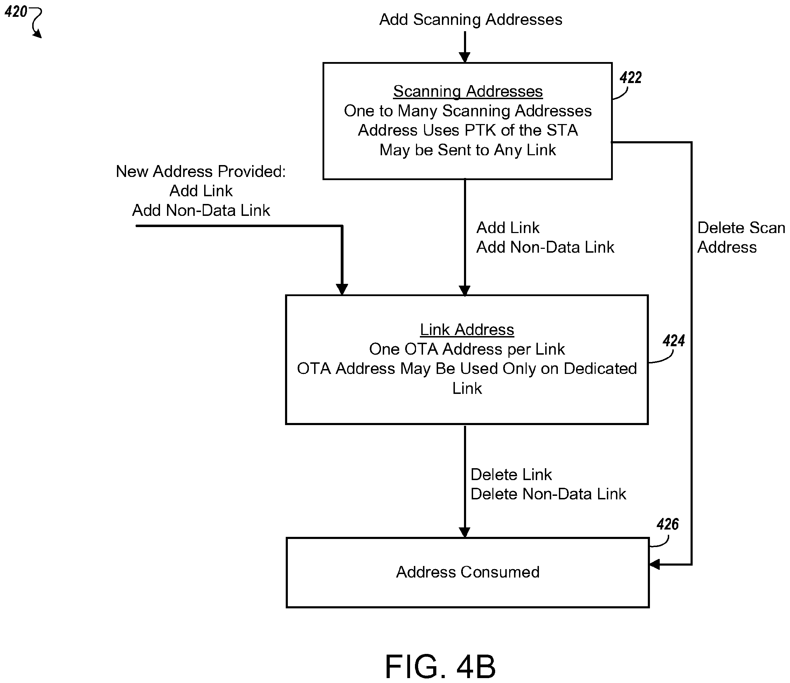

FIG. 4B illustrates a flow diagram that shows an example process 420 for scanning addresses for establishing a communication link in a wireless network. The associated station uses the scanning address to send PTK protected scanning probe requests and to add link requests for all AP MLDs in the MD AP1 for which the station does not already have an established communication link. The scanning addresses assist the receiving AP MLD in detecting the station and applying the correct PTK, e.g., so that association and authentication can proceed. The scanning addresses are known only by the network and the station, so station privacy is protected from unauthorized parties.

The scanning addresses used by the station can be placeholders. In some implementations, the station can use one or more frame OTA transmitter addresses as the placeholder addresses. In some implementations, the station uses frame addresses rather than message integrity code (MIC) tags, e.g., because the frame addresses are faster to use by the station. To add a communication link, data for the additional access point setup is based on the scanning, in which the parameters for the access point are obtained. The station can accept or reject addresses and ensure that each address is unique. The scanning can be performed using lightweight communication links to measure the parameters of the other APs, and these links may not be fully configured.

The mobility domain APs identify the station to apply the correct PTK for frame decryption. The station over-the-air MAC address identifies the station in systems employing a prior version of the 802.11 standard. For example, 802.1 1bh and/or 802.11bi groups can improve station privacy by mitigating opportunities for station tracking. In some implementations, the station can avoid using the same MAC address for multiple APs. Further, the station can configure multiple scanning addresses to be used for one or more APs with which the station does not have an existing link.

For the process 420, the station has roaming support. The PTK and scanning addresses are set up with the network, which forwards the PTK and scanning addresses to one or more APs to enable AP-assisted roaming. For operation 422, the station is configured to add scanning addresses for use in scanning to support establishing communication links with one or more of the APs of the network. The scanning addresses, as previously described, can include many potential addresses for the network. Each address can use the PTK of the station. The station can send one or more probe requests over any link in the network.

For operation 424, the station is configured to determine a link address for establishing a communication link with an AP. The AP provides an additional address and a request to add a communication link or a non-data link. The station can identify itself by establishing one over-the-air address per link. The over-the-air address can be used only for the dedicated link being established by the station.

For operation 426, the station considers one or more of the scanning addresses to be consumed addresses, e.g., after they have been scanned. For example, after a link has been established with the respective scanned address, the station deletes the communication link, or the non-data link associated with the address that is to be considered consumed. In this case, a communication link has already been established and then deleted by the station. In another example, a target AP associated with the scanning address may not be found in the network, e.g., for establishing a communication link with the station. In this case, the station moves to the next address in the scanning process and considers the scanning address that did not have a target AP to be a consumed address.

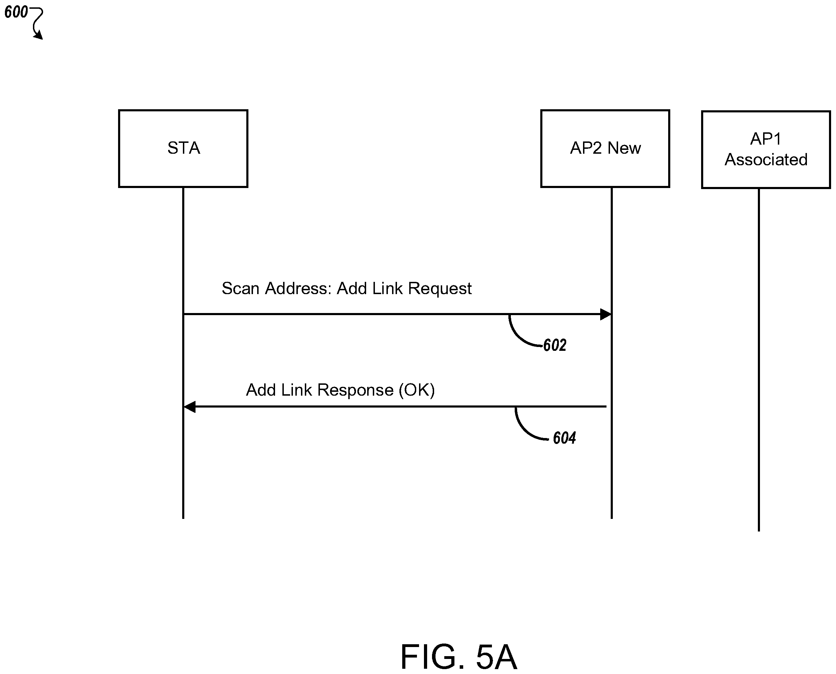

FIG. 5A illustrates an example flow diagram that shows a network 600 with transmissions 602, 604 between a station and an access point for establishing communications links in the network. In this example, the station performs a link setup with a second AP2. The setup can involve the use of protected management frames (PMF) or PMF protection. The station of network 600 can be the same as, or similar to, the stations described previously. The APs of network 600 can be the same as, or similar to, the APs described previously. The station is associated with AP1 and is establishing a link with AP2. After association, the station sends one or more transmissions 602 to add one or more links to the associated AP MLD or other AP MLDs in the same mobility domain. The transmission 602 may have the transmitter address (TA) set to a configured scanning address of the STA. The station sends a PMF-protected probe request to the second AP2. The transmission frames have a transmitter address (TA) set to a scan address. The AP2 responds with PTK protected response transmission 604 to the scan address of the transmission 602.

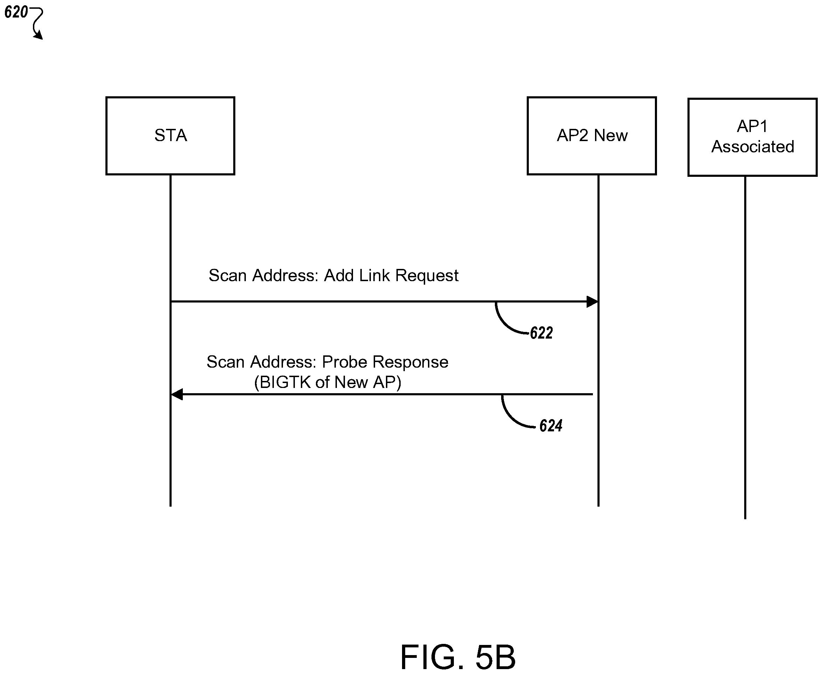

FIG. 5B illustrates an example flow diagram that shows a network 620 with transmissions 622, 624 between a station and an access point for establishing communications links in the network. The network 620 includes active scanning where the station queries one or more AP parameters to learn a BIGTK of the network. In some implementations, the station needs to know one or more AP parameters before it sets the links.

For network 620, the active scanning messages are PMF protected without requiring a PASN setup to establish a separate PTK to encrypt the active scanning messages. A PASN setup for active scanning can add delay(s) and signaling overhead to link setup. In the PASN setup, the station is in a non-associated state. Accordingly, the station would not be allowed to send data on the PASN setup. The PASN can also be used to protect the ranging (location measurements) and the station sensing measurements. The PASN setup is no longer necessary in the network 600. The mobility domain AP-wide PTK can be used to encrypt the active scanning messages instead of the separate PTK that would be established by the PASN.

The station encrypts active scanning using the PTK. For privacy reasons, the station may not include one or more (or any) parameters in the transmitted probe request. Including parameters in the probe request may allow eavesdropping devices to detect, for example, a type of the station or the activity that the station is interested in. For instance, if a device manufacturer has one or more device specific query parameters that are unique to their devices, detecting such query parameters in the probe request could reveal the station type and/or the vendor.

Without the mobility domain AP-wide PTK, the station cannot verify whether the probe response is valid (actually being transmitted by the mobility domain AP). In such an example, the probe response does not include integrity protection or encryption. However, an encrypted probe response based on the mobility domain AP-wide PTK can have integrity protection so that the station can ensure that a probe response is transmitted by an AP that belongs to the same mobility domain.

Each AP has an AP specific BIGTK to add integrity protection for the beacon frames that it transmits. Currently, the BIGTK is obtained only in a 4-way handshake. The associated AP1 MLD can provide the BIGTK of other APs (such as AP2) in the mobility domain, or the BIGTK may be provided in the integrity protected probe response. The BIGTK allows a station to receive broadcasted beacon frames and to verify the integrity of these frames.

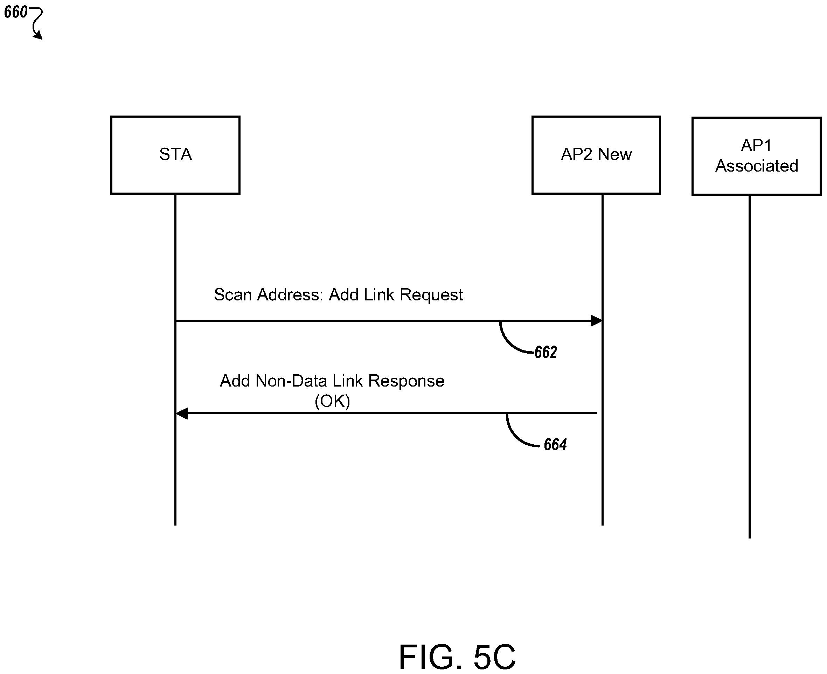

In this example, the station is scanning a second AP2, including PTK protected scanning during the setup. The station of network 620 can be the same as, or similar to, the stations described previously. The APs of network 620 can be the same as, or similar to, the APs described previously. The station is associated with AP1 and is establishing a link with AP2. After association, the station sends one or more scanning addresses in transmission 622 to add one or more links to AP1 or the other AP MLDs in the same mobility domain, as described in relation to FIG. 5C. The associated AP1 MLD may signal a BIGTK in the PTK protected probe response transmission 624 transmission. The BIGTK may be transmitted in a key confirmation key (KCK) protected transmission. The BIGTK of transmission 624 enables the station to verify the integrity of beacon content before association with AP2.

FIG. 5C illustrates an example flow diagram that shows a network 660 with transmissions 662, 664 between a station and an access point for establishing communications links in the network. In this example, the station is performing a link setup with a second AP2, in which the setup of a link with the second AP2 uses a non-data link through the associated AP1 MLD. The station of network 660 can be the same as or similar to the stations described previously. The APs of network 660 can be the same as or similar to the APs described previously. The station is associated with AP1 and is establishing a link with AP2. The station is configured to send a transmission 662 to AP1 that includes a request to establish a non-data link with AP2. The request specifies the identity of AP2 and the station over-the-air address. Associated AP1 MLD sends a response transmission 664, confirming that a non-data link can be established with AP2. Measurement and/or ranging may be performed over a data link and/or a non-data link. A station may have multiple measurements ongoing, simultaneously or concurrently, with multiple AP MLDs. In some implementations, the station transmits uplink and/or downlink data only with one AP MLD at a time. The uplink and/or downlink data transmissions are performed using only data links, not non-data links.

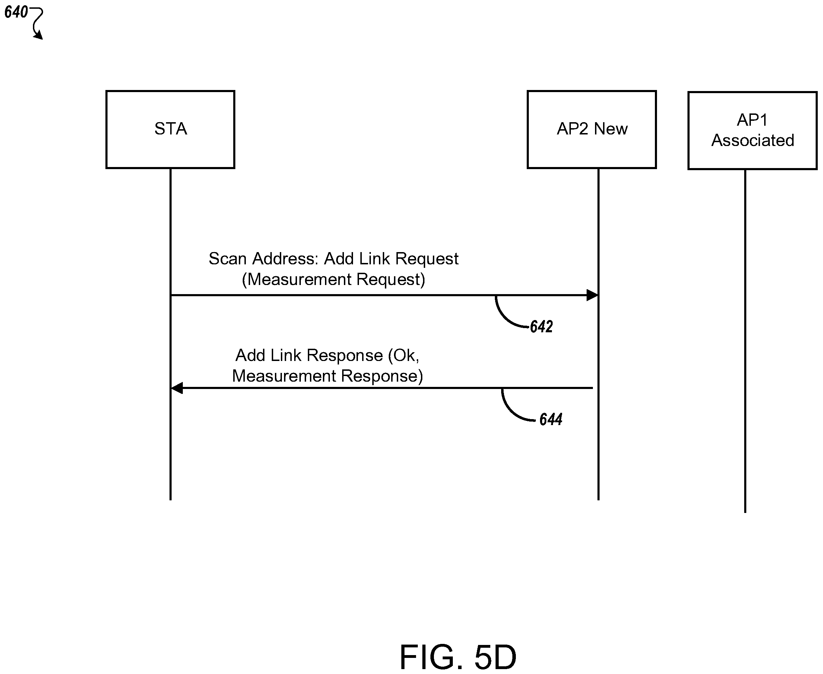

FIG. 5D illustrates an example flow diagram that shows a network 640 with transmissions 642, 644 between a station and an AP for establishing communications links in the network and is a special case of the network of FIG. 5C. In this example, the station is performing a link setup with a second AP (AP2), which may include PMF protected scanning, as shown in FIG. 5A, during the setup of the link with AP2. The station of network 640 can be the same as or similar to the stations described previously. The APs of network 640 can be the same as or similar to the APs described previously. The station is associated with AP1 and is establishing a link with AP2. After association, the station sends one or more scanning addresses in transmission 642 to add one or more links to the associated AP MLD or other AP MLDs in the same mobility domain. In the network 640, the station is configured to perform link setup with a second access point, including using PMF protection. The station is configured to initiate scanning addresses and send a link request including a type of the measurement that the link is used to carry to the add link request on transmission 642. The station sends the transmission 642 to the second access point AP2. AP2 sends its response transmission 644 including an add link response message that indicates that a measurement link is configured. The response transmission 644 confirms that the measurement link is being added. The measurement link may be used to transmit measurement requests and responses. In some embodiments, the add link request and response may include the first measurement request and actual measurement response in 642 and 644 respectively.

The transmissions of network 640 enable the station to generate PTK-protected non-data links or "normal data" links. The station and AP do not need to exchange their parameters (e.g., capabilities, operating parameters, MLD parameters, etc.). These links do not have data transmission capability and are instead used for measurement and/or ranging operations. The *add non-data link request* frame may include the measurement setup to be performed on the link. The *add non-data link request* may request link creation to multiple AP MLDs. The link and the ongoing measurement can be created at the same time.

For networks 600, 620, 640, and 660, the station generates the PTK only once when the station associates with the first AP MLD in the mobility domain (e.g., AP1). The MD AP-wide PTK reduces signaling overhead and simplifies keys usage. The station transmits only encrypted management frames. The station may have non-trackable OTA addresses. The station privacy is well protected, as no links are established without the PTK protection.

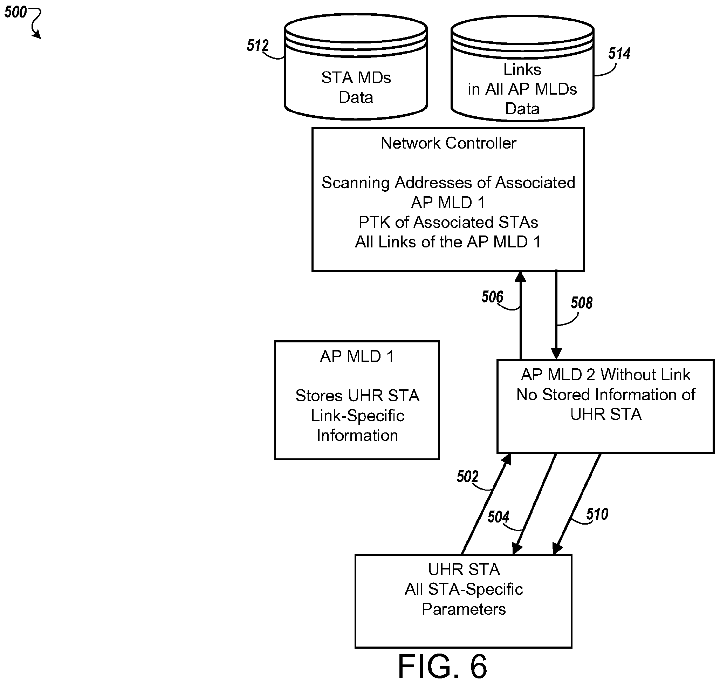

FIG. 6 illustrates a flow diagram that shows an example process 500 for establishing communication links in a wireless network. The flow diagram shows a network controller that is configured for scanning addresses of the AP MLDs of the network controlled by the network controller. The network controller maintains two sets of databases. The network controller has a database 512 including station information for different mobility domains. The database 512 includes PTKs, PMKs, station mobility domain identifiers, and station identifiers for stations operating in the network. The network controller includes a database 514 that includes data for all links for all AP MLDs. The database 514 includes a full set of AP parameters and station parameters for stations and APs of configured links, the AP MLD with which the station is currently associated (if any), and any PTKs and scanning addresses that are configured. In the first set, all STA specific identifiers are stored. This database contains scanning addresses, mobility domain addresses and PTKs of stations of the network. The network controller maintains the second database that contains information describing the configured links in the mobility domain, including link specific identifiers and identifiers of the stations or APs of the links. The network may include an associated AP MLD that stores associated station link specific information in the AP MLD. The network may include an MD station that has all station specific parameters available. The network may include an AP MLD without a link. The AP MLD without a link with the STA may not have stored information of the MD station.

A process 500 for establishing a link with the AP MLD 1 without a link with an MD station is shown. At operation 502, an access point receives a PTK protected action frame over-the-air. The access point acknowledges the frame at operation 504. At operation 506, the access point retrieves data that specifies whether the transmitter address of the frame is a scanning address configured by the network. The access point determines whether the frame is using a scanning address by sending a request to the network controller (e.g., queries the network controller). As one alternative, the scanning address is the transmit address of the frame (Address 2). However, if the transmit address is needed for another purpose, the scanning address may be included elsewhere in the transmitted frame. If the scanning address is in use, at operation 508, the network controller returns the PTK of the station. The access point decrypts, at operation 510, the received protected action frame by using the PTK. If solicited by the request frame, the access point responds to the station. The response is sent based on the scanning address. For example, the receiver address may be set to the scanning address. Further, the response can be protected by the PTK of the STA. A response to requests for adding a link and a probe request can tolerate some level of delay, e.g., between 5 and 10 milliseconds delay. The network controller and AP can complete signaling during this time. Each AP MLD can store information corresponding to its own setup links. The AP MLD may also cache the scanning address and the PTK of a station that has been recently used.

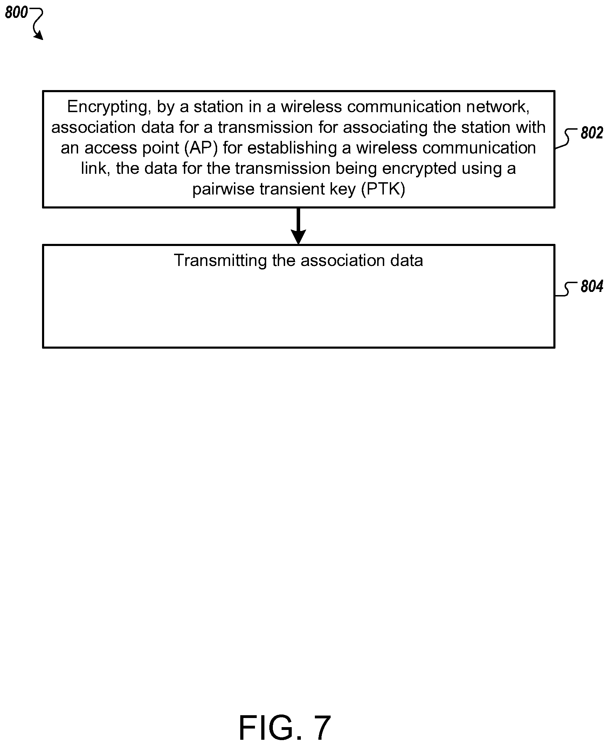

FIG. 7 illustrates a flowchart of an example process 800, according to some implementations. For clarity of presentation, the description that follows generally describes process 800 in the context of the other figures in this description. For example, process 800 can be performed by the stations and systems of FIGS. 1-6. It will be understood that process 800 can be performed, for example, by any suitable system, environment, software, hardware, or a combination of systems, environments, software, and hardware, as appropriate. In some implementations, various operations of process 800 can be run in parallel, in combination, in loops, or in any order.

In an aspect, the process 800 includes encrypting (802), by a station in a wireless communication network, association data to add a communication link, e.g., in connection with associating the station with an access point (AP) for establishing a wireless communication link. The data for the transmission can be encrypted using a pairwise transient key (PTK). The process 800 further includes transmitting (804) the association data, e.g., encrypted using the PTK, for associating with the AP.

The example process 800 shown in FIG. 7 can be modified or reconfigured to include additional, fewer, or different operations (not shown in FIG. 7), which can be performed in the order shown or in a different order. In some implementations, the station is configured to use the PTK for each of a plurality of APs in a mobility domain of the wireless communication network, the plurality of APs including the AP. In some implementations, the association data includes scanning addresses for the station, the scanning addresses including link requests to one or more AP multiple link devices (MLDs) in a mobility domain to which the station does not have an established link, the one or more AP MLDs including the AP.

In some implementations, the process 800 includes receiving a response transmission from the AP, the response transmission being encrypted based on the PTK and indicating a confirmation of association between the AP and the station.

In some implementations, the process 800 includes receiving a response transmission from the AP, the response transmission being encrypted based on the PTK and comprising a BIGTK for the AP.

In some implementations, the association data includes a request to establish a link and a measurement request for establishing the link with the AP, the association data being encrypted based on protected management frames (PMF). In some implementations, the process 800 includes receiving a response transmission from the AP, the response transmission being encrypted based on the PMF, the response transmission comprising a measurement response for the AP.

In some implementations, the association data includes a request to establish a non-data link and a measurement request for establishing the non-data link with the AP, the association data being sent to an associated AP MLD that is different from the AP.

In some implementations, the AP is a non-associated AP MLD for the station. In some implementations, the process 800 includes receiving an acknowledgement from the AP confirming receipt of the association data that is encrypted based on the PTK. In some implementations, the process 800 includes receiving, from the AP, a response encrypted using the PTK, the response based on the PTK being received at the AP from a network controller.

In some implementations, the PTK is a MD AP-wide PTK for a plurality of APs in a mobility domain associated with the station. In some implementations, the association data transmitted by the station includes scanning addresses, the scanning addresses being known to a plurality of APs in a mobility domain associated with the station. In some implementations, the process 800 includes transmitting, based on the scanning addresses, PMF protected probe and access network query protocol (ANQP) frames to the AP in the mobility domain from the station. In some implementations, the process 800 includes transmitting, based on the scanning addresses, ranging or measurement requests to the AP from the station. In some implementations, the process 800 includes transmitting, to the AP, capabilities and operation parameters, the transmitting based on a roaming of the station. In some implementations, the process 800 includes buffering uplink or downlink data of an associated AP MLD for synchronizing with the AP. In some implementations, the wireless communication network is a Wi-Fi network.

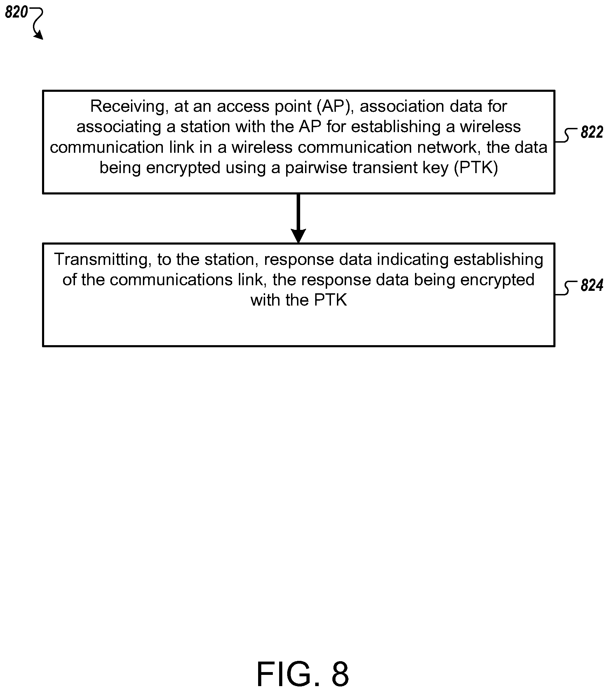

FIG. 8 illustrates a flowchart of an example process 820, according to some implementations. For clarity of presentation, the description that follows generally describes process 820 in the context of the other figures in this description. For example, process 820 can be performed by the APs and systems of FIGS. 1-7. It will be understood that process 820 can be performed, for example, by any suitable system, environment, software, hardware, or a combination of systems, environments, software, and hardware, as appropriate. In some implementations, various operations of process 820 can be run in parallel, in combination, in loops, or in any order.

In an aspect, the process 820 includes receiving (822), at an access point (AP), association data for associating a station with the AP for establishing a wireless communication link in a wireless communication network, the data being encrypted using a pairwise transient key (PTK). The process 820 includes transmitting (824), to the station, response data indicating establishing of the communications link, the response data being encrypted using the PTK.

The example process 820 shown in FIG. 8 can be modified or reconfigured to include additional, fewer, or different operations (not shown in FIG. 8), which can be performed in the order shown or in a different order. In some implementations, the association data specifies a scanning address. In some implementations, the process 820 includes, responsive to receiving the association data, retrieving, from a network controller, data indicative of the PTK for a transmitter address associated with the station. In some implementations, the process 820 includes decrypting the association data using the PTK. In some implementations, the process 820 includes determining, based on the decrypting, that the scanning address specifies an address of the AP. In some implementations, the process 820 includes transmitting, based on determining, the response data.

In some implementations, the association data includes scanning addresses for the station, the scanning addresses including a link request for the AP. In some implementations, the PTK is a MD AP-wide PTK for a mobility domain associated with the station, the mobility domain including the AP. In some implementations, the response data is encrypted based on the PTK and comprise a BIGTK for the AP. In some implementations, the response data comprises a measurement response for the AP. In some implementations, the process 820 includes receiving ranging or measurement requests from the station. In some implementations, the process 820 includes transmitting, based on the requests, ranging or measurement data encrypted with the PTK. In some implementations, the process 820 includes buffering uplink or downlink data for synchronizing with the station. In some implementations, the wireless communication network is a Wi-Fi network.

FIG. 9 illustrates a block diagram of an electronic device 900, according to some implementations. The electronic device 900 can be a cellular telephone, a smartwatch, an access point, a wireless speaker, an Internet-of-Things (IoT) device, among other examples. The electronic device 900 includes hardware resources 902 that include one or more processors (or processor cores) 910, one or more memory/storage devices 920, and one or more communication resources 930, each of which can be communicatively coupled via a bus 940.

The one or more processor(s) 910 include one or more devices configured to perform computational operations. For example, the one or more processor(s) 910 can include one or more microprocessors, application-specific integrated circuits (ASICs), microcontrollers, graphics processing units (GPUs), programmable-logic devices, and/or one or more digital signal processors (DSPs). The processor(s) 910 can include, for example, a processor 912 and a processor 914. The processor(s) 910 can be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 920 can include main memory, disk storage, or any suitable combination thereof. The memory/storage devices 920 can include, but are not limited to, any type of volatile or nonvolatile memory such as dynamic random-access memory (DRAM), static random-access memory (SRAM), erasable programmable read-only memory (EPROM), electrically erasable programmable read-only memory (EEPROM), flash memory, solid-state storage, etc. In some implementations, the memory/storage devices 920 are coupled to one or more high-capacity mass-storage devices (not shown). In some examples, memory/storage devices 920 can be coupled to a magnetic or optical drive, a solid-state drive, or another type of mass-storage device. In these examples, the memory/storage devices 920 can be used by electronic device 900 as fast-access storage for often-used data, while the mass-storage device is used to store less frequently used data.

The communication resources 930 can include interconnection or network interface components or other suitable devices to communicate with one or more peripheral devices 904 or one or more databases 906 via a network 908. For example, the communication resources 930 can include wired communication components (e.g., for coupling via USB), cellular communication components, NFC components, Bluetooth^{®} (or Bluetooth^{®} Low Energy) components, Wi-Fi^{®} components, and other communication components.

The communication resources 930 includes one or more devices configured to couple to and communicate on a wired and/or wireless network (i.e., to perform network operations), such as: control logic, one or more interface circuits and a set of antennas (or antenna elements) in an adaptive array that can be selectively turned on and/or off by control logic to create a variety of optional antenna patterns or "beam patterns." Alternatively, instead of the set of antennas, in some examples, electronic device 900 includes one or more nodes, e.g., a pad or a connector, which can be coupled to the set of antennas. Thus, electronic device 900 might or might not include the set of antennas. For example, communication resources 930 can include a Bluetooth^{™} networking system, a cellular networking system (e.g., a 3G/4G/5G/6G network such as UMTS, LTE, etc.), a universal serial bus (USB) networking system, a networking system based on the standards described in IEEE 802.11 (e.g., a Wi-Fi^{®} networking system), an Ethernet networking system, and/or another networking system.

In some implementations, communication resources 930 includes one or more radios, such as a wake-up radio that is used to receive wake-up frames and wake-up beacons, and a main radio that is used to transmit and/or receive frames or packets during a normal operation mode. The wake-up radio and the main radio can be implemented separately (such as using discrete components or separate integrated circuits) or in a common integrated circuit.

The communication resources 930 includes processors, controllers, radios/antennas, sockets/plugs, and/or other devices used for coupling to, communicating on, and handling data and events for each supported networking system. Note that mechanisms used for coupling to, communicating on, and handling data and events on the network for a network system are sometimes collectively referred to as a "network interface" for the network system.

Instructions 950 can comprise of a software, a program, an application, an applet, an app, or other executable code for causing at least any of the processor(s) 910 to perform any one or more of the methodologies discussed herein. The instructions 950 can reside, completely or partially, within at least one of the processor(s) 910 (e.g., within the processor's cache memory), the memory/storage devices 920, or any suitable combination thereof. In some implementations, any portion of the instructions 950 can be transferred to the hardware resources 902 from any combination of the peripheral devices 904 or the databases 906. Accordingly, the memory of processor(s) 910, the memory/storage devices 920, the peripheral devices 904, and the databases 906 are examples of computer-readable and machine-readable media.

While the preceding discussion used a Wi-Fi communication protocol as an illustrative example, in other implementations a wide variety of communication protocols and, more generally, wireless communication techniques can be used. Thus, the communication techniques can be used in a variety of network interfaces. Furthermore, while some of the operations in the preceding implementations were implemented in hardware or software, in general the operations in the preceding implementations can be implemented in a wide variety of configurations and architectures. Therefore, some or all of the operations in the preceding implementations can be performed in hardware, in software or a combination of both. For example, at least some of the operations in the communication techniques can be implemented using instructions 950, operating system (such as a driver for an interface circuit in communication resources 930) or in firmware in an interface circuit in communication resources 930. Additionally, or alternatively, at least some of the operations in the communication techniques can be implemented in a physical layer, such as hardware in an interface circuit in communication resources 930. In some implementations, the communication techniques are implemented, at least in part, in a MAC layer and/or in a physical layer in an interface circuit in communication resources 930.

While the preceding implementations illustrated the use of wireless signals in one or more bands of frequencies, in some implementations, electromagnetic signals in one or more different frequency bands are used to determine the range. For example, these signals can be communicated in one or more bands of frequencies, including: a microwave frequency band, a radar frequency band, 900 MHz, 2.4 GHz, 5 GHz, 6 GHz, 60 GHz, and/or a band of frequencies used by a Citizens Broadband Radio Service, by LTE, 5G, or any other communication system.

Although specific components are used to describe electronic device 900, in some implementations, different components and/or subsystems can be present in electronic device 900. For example, electronic device 900 can include one or more additional processing subsystems, memory subsystems, networking subsystems, and/or display subsystems. Additionally, one or more of the subsystems might not be present in electronic device 900. In some implementations, electronic device 900 can include one or more additional subsystems that are not shown in FIG. 9. In some implementations, electronic device 900 can include an analysis subsystem that performs at least some of the operations in the communication techniques. Although separate subsystems are shown in FIG. 9, in some implementations some or all of a given subsystem or component can be integrated into one or more of the other subsystems or component(s) in electronic device 900.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes encrypting association data, by a station in a mobility domain of a wireless communication network, wherein the encrypting is performed using a pairwise transient key (PTK); and transmitting the encrypted association data to an AP to establish a wireless communication link.

Example 2 includes the features of example 1, wherein the station uses the PTK to encrypt data for transmission to a second AP of the mobility domain.

Example 3 includes the features of any of examples 1-2, wherein the association data comprises one or more scanning addresses associated with the station, the one or more scanning addresses including a link request to an AP multiple link device (MLD) in the mobility domain with which the station does not have an established link.

Example 4 includes the features of any of examples 1-3, further including receiving a response from the AP, wherein the response is encrypted based on the PTK and indicates a confirmation of association between the AP and the station.

Example 5 includes the features of any of examples 1-4, further including receiving a response from the AP, wherein the response is encrypted based on the PTK and comprises a beacon integrity key (BIGTK).

Example 6 includes the features of any of examples 1-5, wherein the association data comprises a request to establish a link with the AP and a measurement request, the association data being encrypted based on at least one protected management frame (PMF).

Example 7 includes the features of any of examples 1-6, further including receiving a measurement response from the AP, wherein the measurement response is encrypted based on the PMF.

Example 8 includes the features of any of examples 1-7, wherein the association data includes a request to establish a non-data link and a measurement request for establishing the non-data link with the AP, the association data being sent to an associated AP MLD that is different from the AP.

Example 9 includes the features of any of examples 1-8, wherein the station is not associated with the AP, the method further comprising: receiving an acknowledgement from the AP confirming receipt of the encrypted association data; and receiving, from the AP, a response encrypted using the PTK.

Example 10 includes the features of any of examples 1-9, wherein the PTK is a MD AP-wide PTK for a plurality of APs in the mobility domain.

Example 11 includes the features of any of examples 1-10, wherein the association data comprises one or more scanning addresses known to a plurality of APs in the mobility domain.

Example 12 includes the features of any of examples 1-11, further including transmitting, based on the one or more scanning addresses, one or more PMF protected probe or access network query protocol (ANQP) frames to the AP.

Example 13 includes the features of any of examples 1-12, further including transmitting, based on the one or more scanning addresses, a ranging or measurement request to the AP.

Example 14 includes the features of any of examples 1-13, further including transmitting, to the AP, one or more capabilities or operating parameters.

Example 15 includes the features of any of examples 1-14, further including buffering uplink or downlink data of an associated AP MLD for synchronizing with the AP.

Example 16 includes the features of any of examples 1-15, wherein the wireless communication network is a Wi-Fi network.

Example 17 includes receiving, at an access point (AP), association data for associating a station with the AP for establishing a wireless communication link in a wireless communication network, the data being encrypted using a pairwise transient key (PTK); and transmitting, to the station, response data indicating establishing of the communications link, the response data being encrypted with the PTK.

Example 18 includes the features of example 17, wherein the association data specifies a scanning address, the method further including responsive to receiving the association data, retrieving, from a network controller, data indicative of the PTK for a transmitter address associated with the station; decrypting the association data using the PTK; determining, based on the decrypting, that the scanning address specifies an address of the AP; and transmitting, based on determining, the response data.

Example 19 includes the features of any of examples 17-18, wherein the association data includes scanning addresses for the station, the scanning addresses including a link request for the AP.

Example 20 includes the features of any of examples 17-19, wherein the PTK is a MD AP-wide PTK for a mobility domain associated with the station, the mobility domain including the AP.

Example 21 includes the features of any of examples 17-19, wherein the response data are encrypted based on the PTK and comprise a beacon integrity key (BIGTK) for the AP.

Example 22 includes the features of any of examples 17-19, wherein the response data comprise a measurement response for the AP.

Example 23 includes the features of any of examples 17-19, further including receiving, a ranging or measurement request from the station; and transmitting, based on the requests, ranging or measurement data encrypted with the PTK.

Example 24 includes the features of any of examples 17-19, further including buffering uplink or downlink data for synchronizing with the station.

Example 25 includes the features of any of examples 17-19, wherein the wireless communication network is a Wi-Fi network.

Example 26 may include one or more non-transitory computer-readable media including instructions to cause an electronic device, upon execution of the instructions by one or more processors of the electronic device, to perform one or more elements of a method described in or related to any of examples 1-25, or any other method or process described herein.

Example 27 may include an apparatus including logic, modules, or circuitry to perform one or more elements of a method described in or related to any of examples 1-25, or any other method or process described herein.

Example 28 may include a method, technique, or process as described in or related to any of examples 1-25, or portions or parts thereof.

Example 29 may include an apparatus including: one or more processors and one or more computer-readable media including instructions that, when executed by the one or more processors, cause the one or more processors to perform the method, techniques, or process as described in or related to any of examples 1-25, or portions thereof.

Example 30 may include a signal as described in or related to any of examples 1-25, or portions or parts thereof.

Example 31 may include a datagram, information element, packet, frame, segment, PDU, or message as described in or related to any of examples 1-25, or portions or parts thereof, or otherwise described in the present disclosure.

Example 32 may include a signal encoded with data as described in or related to any of examples 1-25, or portions or parts thereof, or otherwise described in the present disclosure.

Example 33 may include a signal encoded with a datagram, IE, packet, frame, segment, PDU, or message as described in or related to any of examples 1-25, or portions or parts thereof, or otherwise described in the present disclosure.

Example 34 may include an electromagnetic signal carrying computer-readable instructions, wherein execution of the computer-readable instructions by one or more processors is to cause the one or more processors to perform the method, techniques, or process as described in or related to any of examples 1-25, or portions thereof.

Example 35 may include a computer program including instructions, wherein execution of the program by a processing element is to cause the processing element to carry out the method, techniques, or process as described in or related to any of examples 1-25, or portions thereof. The operations or actions performed by the instructions executed by the processing element can include the methods of any one of examples 1-25.

Example 36 may include a signal in a wireless network as shown and described herein.

Example 37 may include a method of communicating in a wireless network as shown and described herein.

Example 38 may include a system for providing wireless communication as shown and described herein. The operations or actions performed by the system can include the methods of any one of examples 1-25.

Example 39 may include a device for providing wireless communication as shown and described herein. The operations or actions performed by the device can include the methods of any one of examples 1-25.

The previously described examples 1-25 are implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium.

A system can be configured to perform particular operations or actions by virtue of having software, firmware, hardware, or a combination of them installed on the system that in operation causes the system to perform the actions. One or more computer programs can be configured to perform particular operations or actions by virtue of including instructions that, when executed by the data processing apparatus, causes the apparatus to perform the actions. The operations or actions performed either by the system or by the instructions executed by the data processing apparatus can include the methods of any one of examples 1-25.

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. A method configured for causing a station to perform wireless communication by performing operations comprising:
encrypting association data, for the station in a mobility domain of a wireless communication network, wherein the encrypting is performed using a pairwise transient key (PTK); and
preparing for transmission the encrypted association data to an AP to establish a wireless communication link.

2. The method of claim 1, wherein the station uses the PTK to encrypt data for transmission to a second AP of a mobility domain AP.

3. The method of claim 1 or claim 2, wherein the association data comprises one or more scanning addresses associated with the station, the one or more scanning addresses identifying the station transmitting a link request to an AP multiple link device (MLD) in a mobility domain AP with which the station does not have an established link.

4. The one method of any one of claim 1 through claim 3, further comprising receiving a response from the AP, wherein the response is encrypted based on the PTK and indicates a confirmation of a link creation between the AP and the station.

5. The method of any one of claim 1 through claim 4, further comprising receiving a response from the AP, wherein the response is encrypted based on the PTK and comprises a beacon integrity key (BIGTK) that is link-specific.

6. The method of any one of claim 1 through claim 5, wherein the association data comprises a request to establish a link with the AP and a measurement request, the association data being encrypted based on at least one protected management frame (PMF).

7. The method of claim 6, further comprising receiving a measurement response from the AP, wherein the measurement response is encrypted based on the PMF.

8. The method of any one of claim 1 through claim 7, wherein the association data includes a request to establish a non-data link and a measurement request for establishing the non-data link with the AP, the association data being sent to an associated AP MLD that is different from the AP.

9. The method of any one of claim 1 through claim 8, wherein the station is not associated with the AP, the operations further comprising:
receiving an acknowledgement from the AP confirming receipt of the encrypted association data; and
receiving, from the AP, a response encrypted using the PTK.

10. The method of any one of claim 1 through claim 9, wherein the PTK is a mobility domain access point wide PTK for a plurality of APs in the mobility domain AP.

11. The method of any one of claim 1 through claim 10, wherein the association data comprises one or more scanning addresses known to a plurality of APs in the mobility domain.

12. The method of claim 11, further comprising transmitting, based on the one or more scanning addresses, one or more PMF protected probe or access network query protocol (ANQP) frames to the AP.

13. The method of claim 11, further comprising transmitting, based on the one or more ranging or measurement requests to the AP.

14. The method of any one of claim 1 through claim 13, further comprising transmitting, to the AP, one or more capabilities or operating parameters.

15. One or mor processors configured for performing the operations of any one of claims 1-14.
